# EUROPEAN PATENT APPLICATION

(11) **EP 1 923 254 A2**
(43) Date of publication of application: **21.05.2008**
(21) Application number: 08102057.0
(22) Date of filing: 21.08.2002
(51) Int. Cl.: B60K 15/03, C09J 5/00, B29C 65/48, F16B 11/00

(54) **Fuel tank and fuel tank component**

(30) Priority: 23.08.2001 US 935901
(62) Divisional of application: 02757318.7
(71) Applicant: The Dow Global Technologies Inc., Midland, Michigan 48674 (US)
(72) Inventor: Ramanathan, Ravi, Ann Arbor, MI 48105 (US); Korchnak, Gregory J., Fenton, MI 48430 (US); Courter, David M., Clarkston, MI 48348 (US)
(74) Representative: Hull, John Philip

(57) **Abstract**

A fuel tank assembly comprising a fuel tank (10) and fuel tank component (11) joined to the fuel tank by means of an adhesive wherein the fuel tank and the component have untreated low energy surfaces bonded together with the adhesive comprising an amine/organoborane complex, which adhesive can support a load of 1334 Newtons and exhibits a fuel vapor permeation rate of 46 g-mm/m²/day and the low energy surfaces do not require surface pretreatment.

## Description

The present invention relates to fuel tanks and, more particularly, to improved methods for manufacturing a fuel tank comprising two or more pieces and for bonding or joining components to a fuel tank.

Fuel tanks used in motorized vehicles are typically made of metal and are typically quite impermeable to the passage of fuel vapor. Typically, vapor can be lost through joints between metal sections, from an instrument sensor port, from the fuel lines leading to the engine, or from the fuel neck during fueling of the vehicle.

There have been previously known fuel tanks for vehicles made from synthetic materials, such as plastics. High density polyethylene (HDPE) is presently the plastic material of choice for making plastic automobile fuel tanks. HDPE has excellent tensile and impact properties at temperatures as low as -50°C and at temperatures as high as 70°C which is the temperature range normally experienced by a fuel tank in service. Since HDPE has low cost, it is competitive with steel which is presently used for making most automobile fuel tanks.

Plastic fuel tanks for automobiles are commonly manufactured by the blow molding process, such as extrusion blow molding, and metal fuel tanks are commonly manufactured by welding stamped steel components.

In the blow molding process, tanks are made by extruding a parison into an open mold, closing the mold and blow molding the parison. Extrusion blow molding is a well known process. See, for example, H. G. Fritz "Extrusion Blow Molding," Plastics Extrusion Technology, Edited by Friedhelm Hensen, Hanser Publishers, pp. 363-427.

Fuel tanks can also be made by forming or casting a single unit or can be made by bonding two or more sections into a finished unit.

Various plastic welding techniques such as, for example, hot plate welding and spin welding, are the most common methods used to join fuel tank components such as fill spuds, vent valves, access covers, clips, and other fuel system components that need to be joined to fuel tanks. The production of fuel tanks using stamped steel, stamped stainless steel, and hydroformed steel also requires welding to form the fuel tank body and attached components.

However, the weld joints between the two or more sections of the fuel tank or between the components and the fuel tank, provide leak paths through which fuel vapors may escape to the atmosphere.

Welding techniques require dedicated equipment which increases production costs. Welding techniques also require precise alignment and flat surfaces to achieve a structural, durable, leak proof seal. Because of the various compositions of gasoline, for example aromatic and aliphatic hydrocarbons, oxygenates, such as ethers and low molecular weight alcohols, polymers used in the welding process do not possess the chemical characteristics to inhibit permeation of the entire spectrum of molecules found in a gasoline mixture. With the advent of lower emission requirement brought about by the EPA, alternative, more volatile gasoline mixtures which contain oxygenates, emerged into the market. Current welding processes are designed for neat gasolines (gasolines that contain no oxygenate) and are not effective in preventing emission of oxygenates from weld joints into the atmosphere.

It would be desirable to provide an improved manufacturing/assembly process for joining components to fuel tanks or joining fuel tank pieces or sections together to build a fuel tank. The present inventors have found that such a process would employ adhesives instead of welding techniques and that the process can be employed successfully in the manufacture of metal fuel tanks.

With regard to fuel tanks made of plastics, such as polyethylene, it is very difficult to join a polyethylene component to a plastic fuel tank by means of an adhesive because polyethylene is a low energy plastic material. The commercially available adhesives which are used for bonding a low surface energy plastic substrate to another low energy surface plastic substrate require time consuming or extensive pretreatment of the surface before the adhesive will bond to the surface. Such pretreatments include corona treatment and flame treatment. The requirement for extensive pretreatment of the surface results in significant limitations to the manufacture of plastic fuel tanks.

In a first aspect, the present invention is a fuel tank comprising two or more pieces or sections bonded together with an adhesive which bonds to low energy surface materials.

In a second aspect, the present invention is a metal fuel tank comprising two or more sections bonded together with an adhesive.

In a third aspect, the present invention is a fuel tank assembly comprising a fuel tank and fuel tank component(s) bonded to the fuel tank by means of an adhesive.

In a fourth aspect, the present invention is a method for joining a fuel tank component having a surface to be joined to a surface of a fuel tank which comprises coating one or both surfaces with an adhesive, pressing the two coated surfaces together to form a joint and allowing the adhesive to cure to bond the two surfaces together.

In a fifth aspect, the present invention is a fuel tank assembly comprising (1) a plastic fuel tank having a wall with an outwardly extending opening and comprises a multilayer structure having inner and outer layers of low energy surface materials and a fuel barrier layer therebetween and (2) one or more plastic components bonded to the fuel tank wall along the periphery of the fuel tank wall opening by means of an adhesive which has fuel barrier property and which bonds to low energy surface materials, the plastic component comprising a multilayer structure having thermoplastic inner and outer layers and a fuel barrier layer therebetween, the adhesive contacting the barrier layers of the plastic component and the plastic fuel tank and bridging the gap between the barrier layers of the fuel tank and the plastic components to provide an improved barrier to fuel vapor emission from the joint between the fuel tank and the plastic components.
Fig. 1 shows a typical design of a snap-fit feature to temporarily join plastic components to a plastic fuel tank.
Fig. 2 shows a cut away view of one embodiment of the present invention.
Fig. 3 shows a "donut" design of a "patch" or "plug" for redundant sealing mechanism.
Fig. 4 shows examples of the use of the adhesive of the present invention in a method to obtain redundant sealing for reduced emissions, improved durability and safety in a fuel tank.
Fig. 5 shows the use of LESA and hot plate welding to obtain redundant sealing. LESA is a low energy surface adhesive described hereinafter.
Fig, 6 shows several joint designs in accordance with the present to reduce fuel vapor emissions.

Preferably, the fuel tank comprises a multilayer laminate structure having one or more layers of a low energy surface material and one or more layers of a polymer having fuel barrier property.

More preferably, the fuel tank comprises a three-layer laminate structure having two outer layers of a low energy surface material and a core layer of a polymer having fuel barrier property.

The low energy surface materials which can be employed in the practice of the present invention include any material which meets original equipment manufacturers' (OEM) requirements, such as, for example, polyolefins polytetrafluoroethylene (PTFE), polyethylene terephthalate (PET), acetal (polyoxymethylene) homopolymers and copolymers, nylon, poly(butylene terephalate) (PBT), liquid crystal polymers, polyvinylidene fluoride (PVDF), polyvinylidene chloride (PVDC) and ethylene vinyl alcohol (EVOH).

Polyolefins which can be employed in the practice of the present invention for preparing the multilayer laminate structure include polypropylene, polyethylene, and copolymers and blends thereof, as well as ethylene-propylene-diene terpolymers.

Preferred polyolefins are polypropylene, linear high density polyethylene (HDPE), heterogeneously-branched linear low density polyethylene (LLDPE) such as DOWLEX^{™} polyethylene resin (a trademark of The Dow Chemical Company), heterogeneously branched ultra low linear density polyethylene (ULDPE) such as ATTANE^{™} ULDPE (a trademark of The Dow Chemical Company); homogeneously-branched, linear ethylene/α-olefin copolymers such as TAFMER^{™} (a trademark of Mitsui Petrochemicals Company Limited) and EXACT^{™} (a trademark of Exxon Chemical Company); homogeneously branched, substantially linear ethylene/α-olefin polymers such as AFFINITY^{™} (a trademark of The Dow Chemical Company) and ENGAGE® (a trademark of DuPont Dow Elastomers L.L.C.) of polyolefin elastomers, which can be prepared as disclosed in U.S. Patents 5,272,236 and 5,278,272; and high pressure, free radical polymerized ethylene polymers and copolymers such as low density polyethylene (LDPE), ethylene-acrylic acid (EAA) copolymers such as PRIMACOR^{™} (trademark of The Dow Chemical Conapany), and ethylene-vinyl acetate (EVA) copolymers such as ESCORENE^{™} polymers (a trademark of Exxon Chemical Company), and ELVAX^{™} (a trademark of E.I. du Pont de Nemours & Co.).

The more preferred polyolefins are the homogeneously-branched linear and substantially linear ethylene copolymers with a density (measured in accordance with ASTM D-792) of 0.85 to 0.99 g/cm³, a weight average molecular weight to number average molecular weight ratio (Mw/Mn) from 1.5 to 3.0, a measured melt index (measured in accordance with ASTM D-1238 (190/2.16)) of 0.01 to 100 g/10 min, and an 110/12 of 6 to 20 (measured in accordance with ASTM D-1238 (190/10)). The most preferred polyolefin is a high density polyethylene.

In general, high density polyethylene (HDPE) has a density of at least 0.94 grams per cubic centimeter (g/cc) (ASTM Test Method D-1505). HDPE is commonly produced using techniques similar to the preparation of linear low density polyethylenes. Such techniques are described in U.S. Patents 2,825,721; 2,993,876; 3,250,825 and 4,204,050. The preferred HDPE employed in the practice of the present invention has a density of from 0.94 to 0.99 g/cc and a melt index of from 0.01 to 35 grams per 10 minutes as determined by ASTM Test Method D-1238.

Alternatively, high energy surface materials, that is metals, can also be employed in the practice of the present invention for manufacturing fuel tanks. Such materials include, for example, coated low carbon steel, stainless steel, aluminum, bronze, electroplated nickel-zinc and galvanneal (galvanized steel formed in very thin strips (0.015 to 0.060 inch thick), passed through a molten bath of aluminum/zinc in which the level of aluminum is 0.13-0.15 weight percent, based on the weight of the aluminum/zinc mixture).

Polymers having fuel barrier property which can be employed in the practice of the present invention for preparing the plastic fuel tank and the plastic components include polyamides, polyetrafluroethylene (PTFE), polyamides, fluoroelastomers, polyacetal homopolymers and copolymers, sulfonated and fluorinated HDPE, ethylene vinyl alcohol polymers and copolymers, hydroxy functionalized polyethers and polyesters, and branched polyesters.

Specific examples of polyamides include nylon 6, nylon 66, nylon 610, nylon 9, nylon 11, nylon 12, nylon 6/66, nylon 66/610, nylon 6/11, AMODEL^{™}, (a trademark of BP Amoco) and ZYTEL HTN^{™} (a trademark of E.I. du Pont de Nemours & Co.).

The tie layer, also commonly referred to as an adhesive layer, which can be employed in the practice of the present invention for adhering one layer to an adjacent layer of the multilayer structure is made of an adhesive material, such as a modified polyethylene elastomer. Preferably, the adhesive material is a maleic anhydride grafted polyethylene or polypropylene such as ADMER^{™} (trademark of Mitsui Petrochemicals) adhesive resin or ethylene-vinyl acetate copolymer resins such as ELVAX^{™} (trademark of DuPont).

The adhesives which can be employed in the practice of the present invention for bonding together two or more pieces to make a fuel tank include those adhesives which can support a load of 1334N.

Advantageously, the adhesive has a fuel vapor permeation rate of not more than 46 g-mm/m²/day and, more advantageously, not more than 12 g-min/m²/day, as determined by ASTM E 96 - 94.

Preferably the adhesives which can be employed in the practice of the present invention for bonding components to fuel tanks or for bonding two or more pieces to make a fuel tank are those adhesives which bond to low energy surface plastic materials, such as the adhesives commercially known as LEA and described in an advertisement in the SPE Plastics Engineering magazine, March 2001, page 22 and the adhesives comprising an aminc/organoborane complex, such as those described in a series of patents issued to Skoultchi: US Patent Nos. 5,106,928, 5,143,884, 5,286,821, 5,310,835 and 5,376,746. These patents disclose a two-part initiator system that is reportedly useful in acrylic adhesive compositions.

The first part of the two-part system includes a stable organoborane/amine complex and the second part includes a destabilizer or activator such as an organic acid or an aldehyde.

The organoborane compound of the complex has three ligands which can be selected from C₁₋₁₀ alkyl groups or phenyl groups. Useful amines disclosed include octylamine, 1,6 diaminohexane, diethylamine, dibutylamine, diethylenetriamine, dipropylenediamine, 1,3 propylene diamine, and 1,2 propylene diamine.

Other preferred adhesives which can be employed in the practice of the present invention for joining or bonding plastic components to fuel tanks or for joining two or more pieces of a fuel tank into a finished unit include those adhesives disclosed by Zharov et al. in a series of US Patents (US 5,539,070; US 5,690,780; and US 5,691,065). These patents describe polymerizable acrylic compositions which are particularly useful as adhesives wherein organoborane/amine complexes are used to initiate cure. The organoboranes used have three ligands attached to the borane atom which are selected from C₁₋₁₀ alkyl groups and phenyl. The amine is an alkanol amine or a diamine where the first amine group can be a primary or secondary amine and the second amine is a primary amine. It is disclosed that these complexes are good for initiating polymerization of an adhesive which bonds to low surface energy substrates.

Pocius in a series of patents (US 5,616,796; US 5,6211,43; US 5,681,910; US 5,686,544; US 5,718,977; and US 5,795,657), discloses amine/organoborane complexes with a variety of amines such as polyoxyalkylene polyamines and polyamines which are the reaction product of diprimary amines and compound having at least two groups which react with a primary amine.

The most preferred adhesives which can be employed in the practice of the present invention for joining or bonding the plastic components to the plastic fuel tank or for joining two or more pieces of a fuel tank into a finished unit comprise a preferred class of an amine/organoborane complex described in copending application U.S. Serial No. 09/466,321, filed December 17, 1999. These adhesives are formulated such that no preparation or pre-treatment of the surfaces to be bonded is required.

The organoborane in the amine/organoborane complex is a trialkyl borane or alkyl cycloalkyl borane and the amine is selected from the group consisting of (1) amines having an amidine structural component; (2) aliphatic heterocycles having at least one nitrogen in the heterocyclic ring wherein the heterocyclic compound may also contain one or more nitrogen atoms, oxygen atoms, sulfur atoms, or double bonds in the heterocycle; (3) primary amines which in addition have one or more hydrogen bond accepting groups wherein there are at least two carbon atoms, preferably at least three carbon atoms, between the primary amine and the hydrogen bond accepting group, such that due to inter- or intramolecular interactions within the complex the strength of the B-N bond is increased; and (4) conjugated imines.

Preferably, the trialkyl borane or alkyl cycloalkyl borane corresponds to Formula I :

B(̵R²) 3 Formula 1

wherein B represents Boron; and R² is separately in each occurrence a C₁₋₁₀ alkyl, C₃₋₁₀ cycloalkyl, or two or more of R² may combine to form a cycloaliphatic ring. Preferably R² is C₁₋₄ alkyl, even more preferably C₂₋₄ alkyl, and most preferably C₃₋₄ alkyl.

The amine comprises a compound having a primary amine and one or more hydrogen bond accepting groups, wherein there are at least two carbon atoms, preferably at least three, between the primary amine and hydrogen bond accepting groups. Hydrogen bond accepting group means herein a functional group that through either inter- or intramolecular interaction with a hydrogen of the borane-complexing amine increases the electron density of the nitrogen of the amine group complexing with the borane. Preferred hydrogen bond accepting groups include primary amines, secondary amines, tertiary amines, ethers, halogen, polyethers, and polyamines.

Preferably, the amine corresponds to Formula 2: 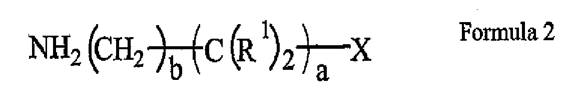 wherein R¹ is separately in each occurrence hydrogen or a C₁₋₁₀ alkyl or C₃₋₁₀ cycloalkyl; X is hydrogen bond accepting moiety; a is an integer of 1 to 10; and b is separately in each occurrence an integer of 0 to 1, and the sum of a and b is from 2 to 10. Preferably R¹ is hydrogen or methyl. Preferably X is separately in each occurrence a hydrogen accepting moiety with the proviso that when the hydrogen accepting, moiety is an amine it is a tertiary or a secondary amine. More preferably X is separately in each occurrence -N(R⁸)ₑ, -OR¹⁰, or a halogen wherein R⁸ is separately in each occurrence C₁₋₁₀ alkyl, C₃₋₁₀ cycloalkyl or -(C(R¹)₂)_{d}-W; R¹⁰ is separately in each occurrence, C₁₋₁₀ alkyl, C₃₋₁₀ cycloalkyl, or -(C(R¹)₂)_{d}-W; and e is 0, 1, or 2. More preferably X is -N(R⁸)₂ or -OR¹⁰. Preferably, R⁸ and R¹⁰ are C₁₋₄ alkyl or -(C(R¹)₂)_{d}-W, more preferably C₁₋₄ alkyl and most preferably methyl; W is separately in each occurrence hydrogen or C₁₋₁₀ alkyl or X and more preferably hydrogen or C₁₋₄ alkyl. Preferably, a is 1 or greater and more preferably 2 or greater. Preferably a is 6 or less, and most preferably 4 or less. Preferably, b is 1. Preferably, the sum of a and b is an integer 2 or greater and most preferably 3 or greater. Preferably the sum of a and b are 6 or less and more preferably 4 or less. Preferably d is separately in each occurrence an integer of 1 to 4, more preferably 2 to 4, and most preferably 2 to 3.

Among preferred amines corresponding to Formula 2 are dimethylaminopropyl amine, methoxypropyl amine, dimethylaminoethylamine, dimethylaminobutylamine, methoxybutyl amine, methoxyethyl amine, ethoxypropylamine, propoxypropylamine, amine terminated polyalkylene ethers (such as trimethylolpropane tris(poly(propyleneglycol), amine terminated)ether), aminopropylmorpholine, isophoronediamine, and aminopropylpropanediamine.

In one embodiment the preferred amine complex corresponds to Formula 3: 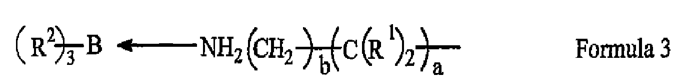 wherein R¹, R², X, a and b are as defined hereinbefore.

In another embodiment the amine is an aliphatic heterocycle having at least one nitrogen in the heterocycle. The heterocyclic compound may also contain one or more of nitrogen, oxygen, sulfur or double bonds.

In addition, the heterocycle may comprise multiple rings wherein at least one of the rings has a nitrogen in the ring. Preferably the aliphatic heterocylic amine corresponds to Formula 4: 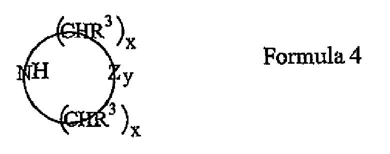 wherein R³ is separately in each occurrence hydrogen, a C₁₋₁₀ alkyl or C₃₋₁₀ cycloalkyl; Z is separately in each occurrence oxygen or NR⁴ wherein R⁴ is hydrogen, C₁₋₁₀ alkyl, or C₆₋₁₀ aryl or alkaryl; x is separately in each occurrence an integer of 1 to 10, with the proviso that the total of all occurrences of x should be from 2 to 10; and y is separately in each occurrence 0 or 1. Preferably, R³ is separately in each occurrence hydrogen or methyl. Preferably Z is NR⁴. Preferably, R⁴ is hydrogen or C₁₋₄ alkyl, and more preferably hydrogen or methyl. Preferably x is from 1 to 5 and the total of all the occurrences of x is 3 to 5. Preferred compounds corresponding to Formula 4 include morpholine, piperidine, pyrolidine, piperazine, 1,3,3 trimethyl 6-azabicyclo[3,2,1] octane, thiazolidine, homopiperazine, aziridine, 1,4-diazabicylo[2.2.2]octane (DABCO), 1-amino-4-methylpiperazine, and 3-pyrroline. Complexes using aliphatic heterocyclic amines preferably correspond to formula 5: 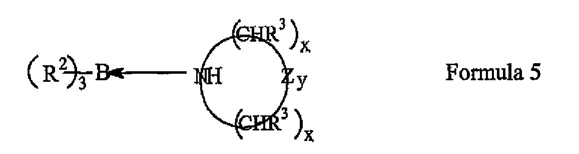 wherein R², R³, Z, x and y are as defined hereinbefore.

In yet another embodiment, the amine which is complexed with the organoborane is an amidine. Any compound with amidine structure wherein the amidine has sufficient binding energy as described hereinbefore with the organoborane, may be used. Preferable amidine compounds correspond to Formula 6: 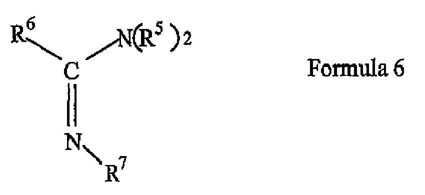 Wherein R⁵, R⁶, and R⁷ are separately in each occurrence hydrogen, a C₁₋₁₀ alkyl or C₃₋₁₀₀ cycloalkyl; two or more of R⁵, R⁶, and R⁷ may combine in any combination to form a ring structure, which may have one or more rings. Preferably R⁵, R⁶ and R⁷ are separately in each occurrence hydrogen, C₁₋₄ alkyl or C₅₋₆ cycloalkyl. Most preferably R⁷ is H or methyl. In the embodiment where two or more of R⁵, R⁶ and R⁷ combine to form a ring structure the ring structure is preferably a single or a double ring structure. Among preferred amidines are 1,8 diazabicyclo[5,4]undec-7-ene; tetrahydropyrimidine; 2-methyl-2-imidazoline; and 1,1,3,3-tetramethylguanidine.

The organoborane amidine complexes preferably correspond to Formula 7: 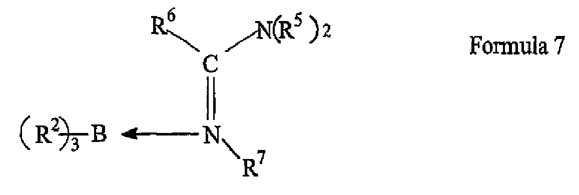 wherein R², R⁵, R⁶ and R⁷ are as defined earlier.

In yet another embodiment, the amine which is complexed with the organoborane is a conjugated imine. Any compound with a conjugated imine structure, wherein the imine has sufficient binding energy as described hereinbefore with the organoborane, may be used. The conjugated imine can be a straight or branched chain imine or a cylic imine. Preferable imine compounds correspond to Formula 8: 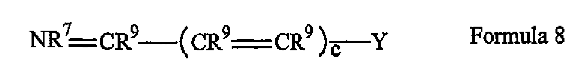 wherein Y is independently in each occurrence hydrogen, N(R⁴)₂, OR⁴, C(O)OR⁴, halogen or an alkylene group which forms a cyclic ring with an R⁷ or R⁹. R⁴ is hydrogen, C₁₋₁₀ alkyl, or C₆₋₁₀ aryl or alkaryl. Preferably R⁴ is hydrogen or methyl. R⁷ is as described previously. R⁹ is independently in each occurrence hydrogen, Y, C₁₋₁₀ alkyl, C₃₋₁₀ cycloalkyl-, (C(R⁹)₂-(CR⁹=CR⁹)_{c}-Y or two or more of R⁹ can combine to form a ring structure provided the ring structure is conjugated with respect to the double bond of the imine nitrogen; and c is an integer of from 1 to 10. Preferably, R⁹ is hydrogen or methyl.

Y is preferably N(R⁴)₂, or OR⁴, or an alkylene group which forms a cyclic ring with R⁷ or R⁹.

Y is more preferably N(R⁴)₂ or an alkylene group which forms a cyclic ring with R⁷ or R⁹. Preferably, c is an integer of from 1 to 5, and most preferably 1. Among preferred conjugated imines useful in this invention are 4-dimethylaminopyridine; 2,3-bis(dimethylamino)cyclopropeneimine;(dimethylamine)acroleinimine; and 3-(dimethylamino)methacroleinimine.

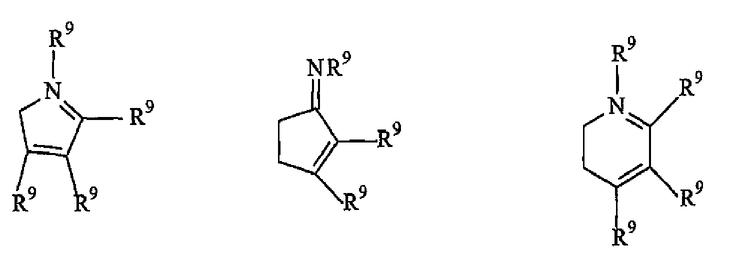

Among preferred cyclic imines are those corresponding to the following structures:

The complexes with the conjugated imines preferably correspond to Formula 9: 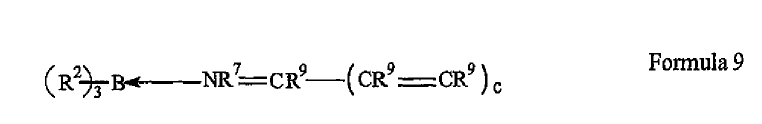 wherein R², R⁷, R⁹, c and Y are as defined hereinbefore.

The molar ratio of amine compound to borane compound in the complex is relatively important. In some complexes if the molar ratio of amine compound to organoborane compound is too low, the complex is pyrophoric. Preferably the molar ratio of amine compound to organoborane compound is from 1.0:1.0 to 3.0:1.0. Below the ratio of 1.0:1.0 there may be problems with polymerization, stability of the complex and for adhesive uses, adhesion. Greater than a 3.0:1.0 ratio maybe used although there is no benefit from using a ratio greater than 3.0:1.0. If too much amine is present, this may negatively impact the stability of the adhesive or polymer compositions. Preferably the molar ratio of amine compound to organoborane compound is from 2.0:1.0 to 1.0:1.0.

Polymerizable compounds which may be used in the polymerization compositions of the adhesive include acrylate and/or methacrylate based compounds, with methylmethacrylate, butylmethacrylate, 2-ethylhexylmethacrylate, isobornylmethacrylate, tetrahydrofurfuryl methacrylate, and cyclohexylmethylmethacrylate as the most preferred.

Adhesives which do not bond to low energy surface materials can be used also in the practice of the present invention. These adhesives require pretreatment of the surfaces of the materials to be joined. Such adhesives, include, for example, polyurethane-, epoxy-, polyimide-, phenolic/resorcinolic-, or acrylate-based adhesives.

Surface pretreatments of metals include, for example, phosphate conversion coating, passivation, pickling, grit-blasting, various plasma treatments, for example oxygen, helium, argon, air, nitrous oxide, carbon dioxide, nitrogen, and ammonia; flame-carried silane (Pyrosil®), sandpaper delivered silicate, various solvent soaks and wipes, abrading, alkali cleaning, silane-based primers, peel ply and artificial surface coatings, that is e-coat.

Surface pretreatments of plastics include, for example, etching, aluminum-alkali and electrochemical treatments, solvent cleaning, flame treatments, chemical treatments, plasma treatments, artificial coatings, UV irradiation and photochennical treatments.

As previously described, fuel tanks can be made by forming a single unit or by joining two or more sections into a finished unit. The sections can be in the form of clam shells which can be made by blow-molding, injection molding, thermoforming or compression molding, in the case of plastic fuel tanks, or by stamping, hydroforming or other fabrication techniques known in the art, in the case of metal fuel tanks. Two clam shells are joined together by means of the adhesive described previously to make a fuel tank. The adhesive can be applied robotically or manually to one or both of the surface(s) to be joined together.

In general, plastic components can be joined or bonded to fuel tanks by applying an adhesive to either one or both of the surfaces to be joined, pressing the two surfaces together and allowing the adhesive to cure to an acceptable green strength. If desired the cure rate of the adhesive can be accelerated by mechanical methods such as, for example, ultraviolet radiation, radiofrequency, and dielectric heating. Other known methods to accelerate the curing time of the adhesive include induction curing which exposes the substrate to an electromagnetic pulse, and convection heating.

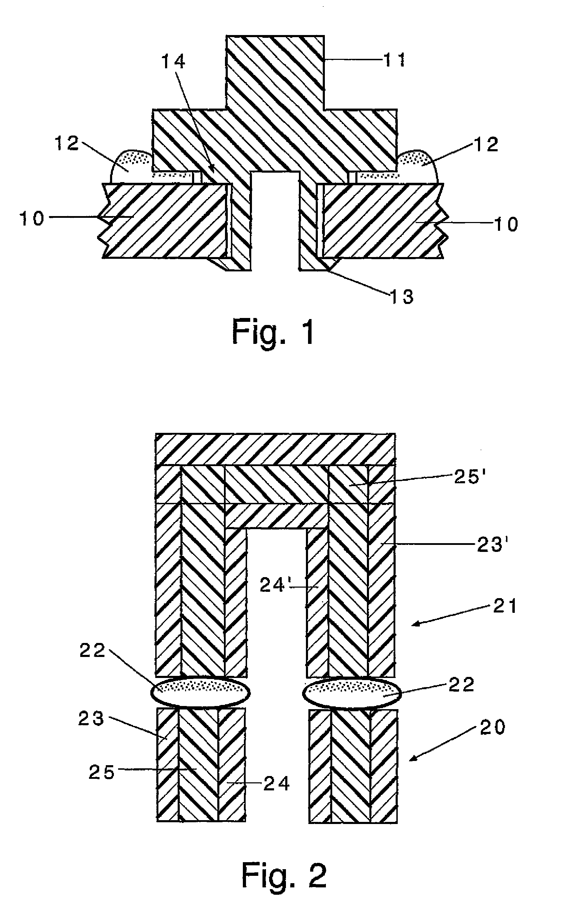

Referring now to Fig. 1, there is shown HDPE fuel tank 10 and plastic component 11 attached to fuel tank 10 by means of adhesive 12. Adhesive 12 is as described previously. Fuel tank 10 comprises a wall 15 and a generally cylindrical opening (not shown) through the wall. Preferably, fuel tank 10 comprises a multilayer laminate structure having one or more layers of a low energy surface material and one or more layers of a polymer having fuel barrier property.

Plastic component 11 can be, for example, a fill spud, vent valve, access cover, fuel line, fuel pump, fuel cut-off valve, fuel level gauge, clips, cam locks, fuel sender, sender unit, filler pipe, charcoal canister, fuel filter, flexible fuel feed and return jumper hose, on-board diagnostic components, refueling vapor recovery control components such as valves, vapor/liquid separator, and other fuel system components that need to be joined to fuel tanks.

Plastic component 11 comprises a single or multi-walled tubular body having a first open end and a second open end, the first open end extending outwardly through tank wall opening 16, and the second open end extending inwardly into the tank. Plastic component 11 can be made by injection molding.

In operation, the second open end of plastic component 11 is pushed through the tank wall opening until its outer periphery is in contact with the periphery of the tank wall opening and bonded thereto by the adhesive, the adhesive providing an adequate fuel barrier at the interface between the plastic component and tank wall opening, the fuel tank and the plastic component comprising a polymer having fuel barrier property.

Referring back to Fig. 1, plastic component 11 is provided at one open end with snap-fit 13 which is snapped over the periphery of the tank wall opening. Snap fit 13 and/or an interference fit, or other mechanical attachment, such as, for example, a clip, clamp or nut and bolt, is used to temporarily join components described previously to a fuel tank to provide the necessary pressure to fully "wet out" the adhesive bead and to support the component while the adhesive cures to adequate green strength.

Referring now to Figure 2, there is shown a fuel tank wall having an opening 20 with a close-out lid 21. Close-out lid 21 is joined to the fuel tank wall along the periphery of the fuel tank opening 20 by means of an adhesive 22. Adhesive 22 is a polymer with adhesive and barrier properties. The adhesive is as described previously. The fuel tank wall comprises high density polyethylene outer layers 23 and 24 and a barrier polymer layer 25 therebetween. The close out lid comprises high density polyethylene outer layers 23' and 24' and a barrier polymer layer 25' therebetween. As shown, the adhesive layer 12 is in contact with the barrier layer 25 of the fuel tank wall and the barrier layer 25' of the close out lid, bridging the gap between the barrier layers of the tank wall opening and the close out lid, thus preventing the emission of fuel vapor from the joint between the close out lid and the tank opening.

Fuel vapor can be lost through joints between the HDPE fuel tank and the plastic components joined or bonded to the fuel tank. This problem can be solved by applying a seal (primary seal) at the joints. However, such primary seals are not always reliable.

To ensure fuel vapor does not escape through such joints should the primary seal fail, a redundant seal, also known as a back-up seal or a secondary seal can be applied around the primary seal. Several redundant sealing methods are described as follows.

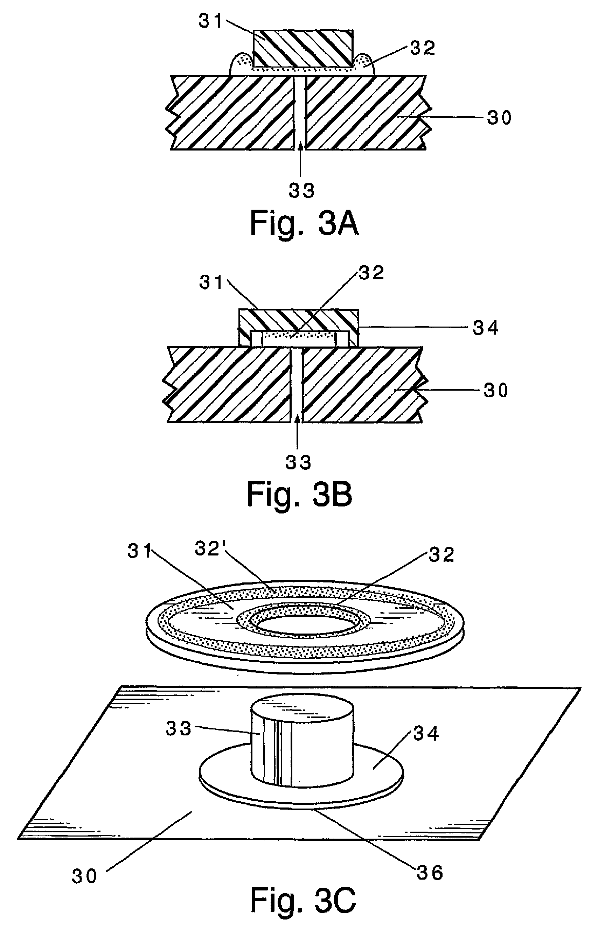

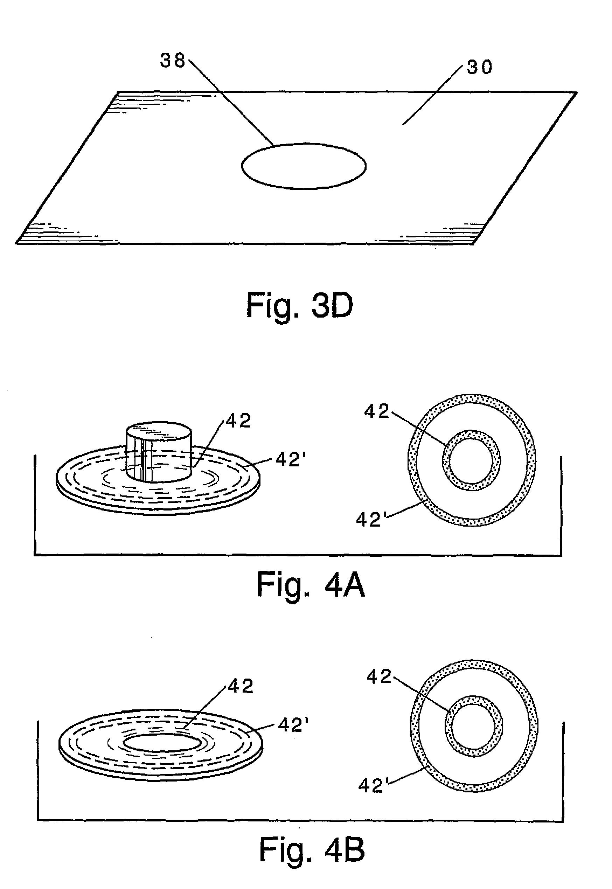

An overlapping cover, such as the "donut" design shown in Fig. 3C can be used as a redundant sealing mechanism. The shape and geometry is not limited to a circular design as any geometric shape with adequate overlap of the inner joint (component /cap/cover to tank) is viable.

Referring to Fig. 3C, there is shown fill spud 33 having a flange 34 attached to plastic fuel tank 30. There is a leak 36 at the interface of flange 34 and fuel tank 30. A patch/donut 31 is placed on fill spud 33 as shown. Patch /donut 31 comprises a multilayer laminate structure as described previously. Thick adhesive beads 32 and 32' are applied around the inner and outer peripheries, respectively, of donut 31. When donut 31 is slid down fill spud 33 and pressed against flange 34 and fuel tank 30, adhesive bead 32 bonds the inner periphery of donut 31 to the outer surface of the cylinder of fill spud 33 and adhesive bead 32' bonds the outer periphery of donut 31 to fuel tank 30. Donut 31 is large enough to cover flange 34 and prevents the emission of fuel vapor from leak 36. Adhesive bead 32 is the primary seal and adhesive bead 32' is the redundant seal.

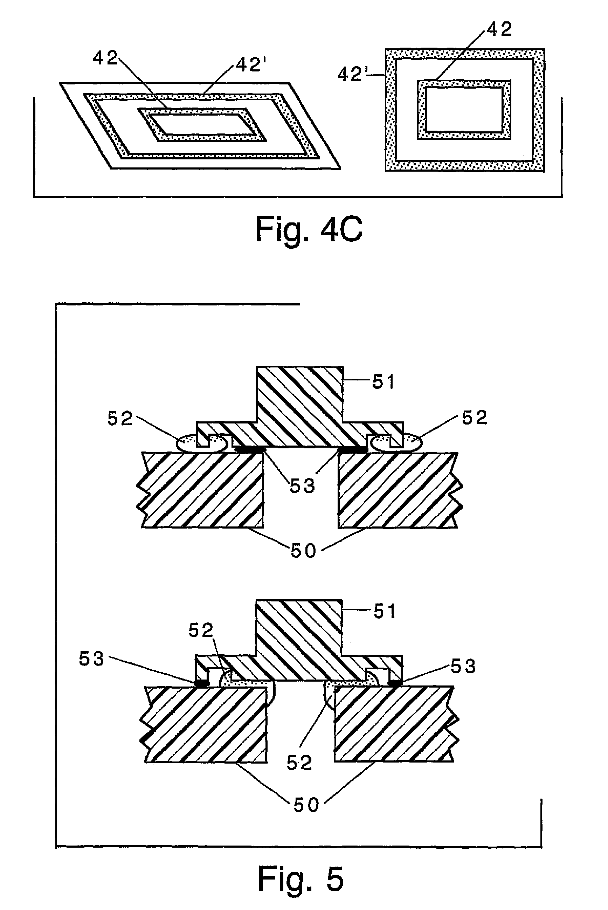

The use of the adhesive described previously, combined with hot plate welding is another method to obtain redundant sealing for reduced emissions, improved durability, and safety. In Figs. 5A and 5B, there is shown plastic component 51 attached to fuel tank 50 by means of adhesive 52 and weld 53.

Figs. 4A to 4C show various designs of redundant seals. In Fig. 4A, thick adhesive bead 42 is applied around the cylinder at the base of fill spud 43, and a thick adhesive bead 42' is applied around the periphery of the fill spud base to obtain a redundant seal for improved durability and/or emissions barrier.

Fig. 4B shows a round lid/cover with double circular adhesive beads 42 and 42.

Fig. 4C shows a rectangular lid/cover with double rectangular adhesive beads 42 and 42'.

The double beads can be used to attach any component, cover, lid, to the fuel tank. The start/end point of each bead can be placed at opposite ends of each bead path to minimize direct routes for emissions to escape. Additionally, this method of adhesive application will minimize the chance of leakage if the adhesive delivery system has a momentary surge, thereby causing a void in the adhesive bead.

Creating curvature in the joint design can also minimize fuel vapor emissions. A mountainous topographical joint with valleys and peaks lowers the permeation rate.

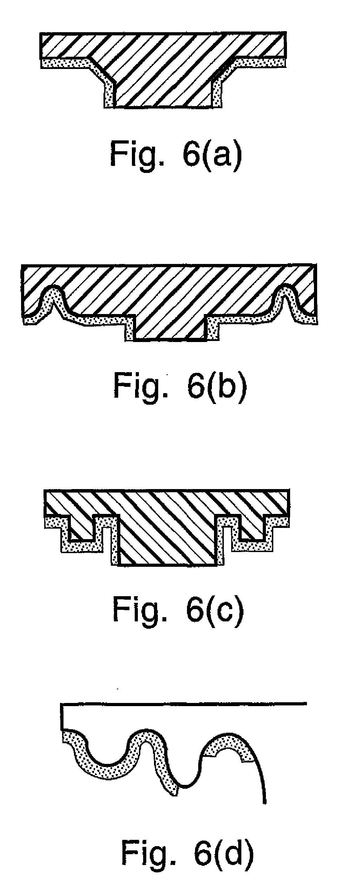

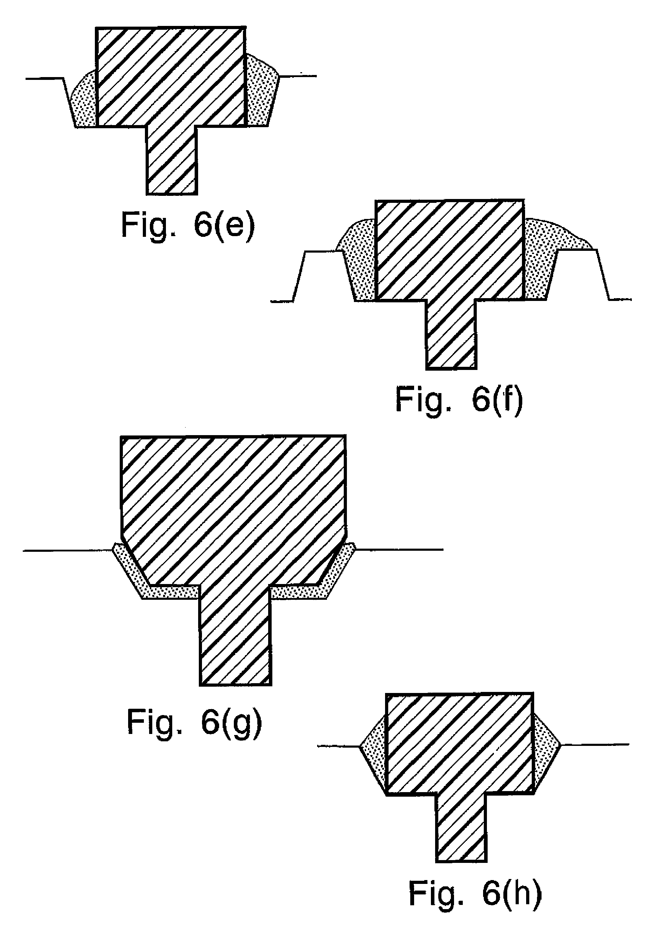

Shown in Fig. 6 are several joint designs which creates tortuous paths to minimize fuel vapor emission. Shown in Figs. 6(b) and 6(d) are long tortuous paths which would limit permeation. These long and winding paths may be incorporated into the roll over valves, and the lip extension of the roll over valve may be incorporated into the camlock. One particular camlock design, shown in Fig. 6(d) has a locator. The locator would then connect the camlock to the fuel tank, which would have a receptor. This locator is difunctional. First, the locator ensures proper alignment. Second, the locator closes the gap at the area. Dimples may also be incorporated on the various parts to ensure proper bond width.

There are three modes of failure to any joint design: mode 1 is peel-mode, mode 2 is shear, and mode 3 is torsion.

To increase joint strength, failure mode of joint is shifted to shear mode. Fig. 6 shows several joint designs which shift failure mode of joint to shear. All of the joint designs shown in Figs 6(a) to 6(m) put the parts in mode 2 failure. The idea is to move away from a butt joint design, which puts any part in mode 1 failure, under load.

The roll over valves shown in Figs. 6(e), 6(f), 6(h), 6(i) and 6(j) are given an extra lip, which creates an angle between 30° and 80°. The lip is not required to put the roll over valve in shear, as shown in Fig. 6(g). A 90° angle would be applicable for one-dimensional force; however, this is rarely the case. Adding a joint design with an angle less the 90° accounts for a force in two directions, as shown in Figs. 6(a) to 6(m). Camlock designs as shown in Figs. 6(a) to 6(d) and 6(k) to 6(m) show the curvature of the joint design, as well. Because of the size of the bond line, portions of the joint may be 90°. However, portions of the joint move away from the 90°, to ensure multidimensional load capacities as shown in Fig. 6(d).

The present invention also encompasses fuel tanks and fuel tank components which are made of polymers having inadequate fuel barrier property. Such fuel tanks and fuel tank components can be coated with VPP (vapor phase plasma) type coatings as described in copending application U.S. Serial No. 60/209540, filed June 6, 2000. Examples of such plasma-type coatings include electromagnetic radiation generated plasma, microwave generated plasma and AC current generated plasma as are taught in U.S. Patents 5,702,770; 5,715,967, and DC current arc generated plasma as taught in U.S. Patent 6,110,544. Magnetic guidance of plasma such as is taught in U.S. Patent 5,900,284. For plasma generated coatings on the inside surface of a container, plasma may be generated within the container similar to the teachings of U. S. Patent 5,565,248 which is limited to inorganic sources of plasma for coatings including silicon. Further, the magnetic guidance of plasma as taught in U.S. 5,900,284 may be wholly within a container, or optionally magnetic guidance and a plasma generating electrode may be wholly within a container. Magnetic guidance of plasma for a barrier coating on the inside surface of a container may also be provided by magnetic guidance wholly outside a container and optionally with plasma generating electrode(s) within the container. Magnetic guidance of plasma for a barrier coating on the inside surface of a container may also be provided by magnetic guidance, partially within a container and partially outside a container. Optionally for the case of magnetic guidance of plasma for a barrier coating on the inside surface of a container, where partial magnetic guidance is provided within the container, a plasma generating electrode may also be included within the container, as may a source for the plasma reactant, a silane.

Generally plasma is more readily generated under vacuum conditions. Absolute pressures in the chamber where plasma is generated are often less than 100 Torr, preferably less than 100 mTorr.

In one embodiment of the invention, there is provided a fuel tank comprising two or more sections bonded together with an adhesive which bonds to low energy surface materials. The fuel tank is preferably made of a thermoplastic or thermosetting polymer.

The fuel tank is preferably a mono layer low energy surface material or a multilayer structure comprising a core layer of a fuel barrier polymer and outer layers of a low energy surface material. The low energy surface material is preferably high density polyethylene and the fuel barrier polymer is preferably selected from the group consisting of polyamides, fluoroelastomers, polyacetal homopolymers and copolymers, sulfonated ar fluorinated HDPE, ethylene vinyl alcohol polymers and copolymers, hydroxy-functionalized polyethers and polyesters, and branched polyesters.

The adhesive preferably can support a load of 1334 Newtons. The adhesive preferably has a fuel vapor permeation rate of not more than 46g-mm/m²/day as determine by ASTM E 96 - 94.

The adhesive preferably comprises an amine/organoborane complex. The organoborane is preferably a trialkyl borane or alkyl cycloalkyl borane and the amine is preferably selected from the group consisting of (1) amines having an amidine structural component; (2) aliphatic heterocycles having at least one nitrogen in the heterocyclic ring wherein the heterocyclic compound may also contain one or more nitrogen atoms, oxygen atoms, sulfur atoms, or double bonds in the heterocycle; (3) primary amines which in addition have one or more hydrogen bond accepting groups wherein there are at least two carbon atoms, preferably at least three carbon atoms, between the primary amine and the hydrogen bond accepting group, such that due to inter- or intramolecular interactions within the complex the strength of the B-N bond is increased; and (4) conjugated imines. In preferred embodiments, the complex of the organoborane and the primary amine corresponds to the formula 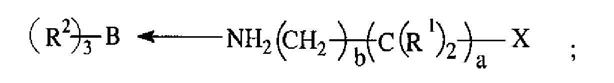 the organoborane heterocyclic amine complex corresponds to the formula 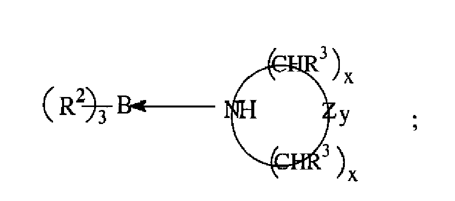 the organoborane amidine complex corresponds to the formula 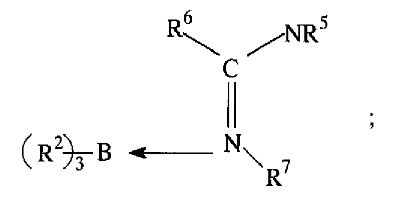 and the organoborane conjugated imine complex corresponds to the formula 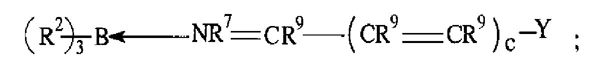 wherein B is boron; R¹ is separately in each occurrence hydrogen, a C₁₋₁₀,alkyl or C₃₋₁₀ cycloalkyl; R² is separately in each occurrence a C₁₋₁₀ alkyl, C₃₋₁₀ cycloalkyl or two or more of R² may combine to form a cycloaliphatic ring structure; R³ is separately in each occurrence hydrogen, a C₁₋₁₀ alkyl or C₃₋₁₀ cycloalkyl; R⁴ is separately in each occurrence hydrogen, C₁₋₁₀ alkyl, C₃₋₁₀ cycloalkyl, C₆₋₁₀ aryl or alkaryl; R⁵, R⁶, and R⁷ are separately in each occurrence hydrogen, C₁₋₁₀ alkyl, C₃₋₁₀ cycloalkyl, or two or more of R⁵, R⁶ and R⁷ in any combination can combine to form a ring structure which can be a single ring or a multiple ring structure and the ring structure can include one or more of nitrogen, oxygen or unsaturation in the ring structure; R⁹ is independently in each occurrence hydrogen, C₁₋₁₀ alkyl or C₃₋₁₀ cycloalkyl, Y, -(C(R⁹)₂(CR⁹=CR⁹)cY or two or more of R⁹ can combine to form a ring structure, or one or more of R⁹ can form a ring structure with Y provided the ring structure is conjugated with respect to the double bond of the imine nitrogen; X is a hydrogen-bond accepting group with the proviso that where the hydrogen bond accepting group is an amine it must be secondary or tertiary; Y is independently in each occurrence hydrogen, N(R⁴)₂, OR⁴, C(O)OR⁴, a halogen or an alkylene group which forms a cyclic ring with R⁷ or R⁹; Z is separately in each occurrence oxygen or -NR⁴; a is separately in each occurrence an integer of from 1 to 10; b is separately in each occurrence 0 or 1, with the proviso that the sum of a and b should be from 2 to 10; c is separately in each occurrence an integer of from 1 to 10; x is separately in each occurrence an integer of 1 to 10, with the proviso that the total of all occurrences of x is from 2 to 10; and y is separately in each occurrence 0 or 1.

In one preferred embodiment, the organo borane/amine complex comprises an aliphatic heterocylic amine which is a five or six membered heterocylic compound.

In another preferred embodiment, the organo borane compound of the complex has three ligands selected from C₁₋₁₀ alkyl groups or phenyl groups, and the amine compound is selected from 1,6 diaminohexane, diethylamine, dibutylamine, diethylenetriamine, dipropylenediamine, 1,3 propylene diamine, and 1,2 propylene diamine.

In a further preferred embodiment, the organoborane compound of the complex has three ligands attached to the borane atom which are selected from C₁₋₁₀ alkyl groups and phenyl and the amine compound is an alkanol amine or a diamine wherein the first amine group is a primary or secondary amine and the second amine is a primary amine.

In another preferred embodiment, the amine compound of the complex is a polyoxyalkylene polyamine or a polyamine which is the reaction product of a diprimary amine and a compound having at least two groups which react with a primary amine.

The fuel tank preferably comprises two or more parts in the form of clam shells. The clam shells are preferably made of thermoplastic material and formed by extrusion blow molding, injection molding, thermoforming or compression molding.

In an alternative embodiment there is provided a metal fuel tank comprising two or more parts bonded together with an adhesive. The fuel tank is preferably made of stainless steel, pre-coated low-carbon steel, or post-coated low-carbon steel, aluminum, bronze, electroplated zinc, nickel or galvanneal. The adhesive preferably comprises a polyurethane-, epoxy-, polyimide-, phenolic/resorcinolic-, or acrylate-based adhesive. The fuel tank preferably comprises two or more parts in the form of clam shells. The clam shells are preferably made of steel and are formed by stamping or hydroforming.

In a further alternative embodiment, there is provided a fuel tank assembly comprising a fuel tank and fuel tank component(s) joined to the fuel tank by means of an adhesive.

The fuel tank component is preferably a fill spud, vent valve, access cover, fuel line, fuel pump, fuel cut-off valve, fuel level gauge, clip, cam lock or fuel sender, roll-over valve, or heat shield.

The fuel tank fuel tank and fuel tank components are preferably made of thermoplastic or thermosetting polymers or steel. The steel is preferably stainless steel, pre-coated low-carbon steel, or post-coated low-carbon steel, and the thermoplastic or thermosetting polymer is preferably polyoxymethylene, nylon, polyethylene, polyethyleneterephthalate, polytetrafluoroethylene, polyvinylidene fluoride, polyvinylidene chloride, ethylene vinyl alcohol or polypropylene.

Preferably the fuel tank is co-extrusion blow-molded and the fuel tank components are joined to the external or internal surface of the fuel tank.

The fuel tank assembly preferably further comprising a primary seal applied at the joint between the fuel tank and the fuel tank component(s) and a redundant seal applied around the primary seal.

Preferably, the fuel tank and fuel tank components are coated with a vapor phase plasma type coating. The plasma coating is preferably applied on the internal or external surface of the fuel tank.

In an alternative embodiment, there is provided a fuel tank assembly comprising a plastic fuel tank having a wall with an outer surface and an inner surface, a single or multi-walled thermoplastic or metal component having a first open end and a second open end, the first open end extending outwardly through an opening in the tank wall, and the second open end extending inwardly into the tank until it is in contact with the periphery of the tank wall opening and bonded thereto by an adhesive.

In a further alternative embodiment, there is provided a fuel tank assembly comprising (1) a plastic fuel tank having a wall with an outwardly extending cylindrical opening and comprising a multilayer structure having inner and outer layers of low energy surface materials and a fuel barrier layer therebetween and (2) plastic component(s) attached or joined to the fuel tank wall along the periphery of the fuel tank wall opening by means of an adhesive having adequate structural strength, fuel resistance, sealing, and vapor emission properties, the plastic component comprising a multilayer structure having thermoplastic inner and outer layers and a fuel barrier layer therebetween, the adhesive contacting the barrier layers of the plastic component and the plastic fuel tank and bridging the gap between the barrier layers of the fuel tank and the plastic components to provide a continuous barrier to fuel vapor emission from the joint between the fuel tank and the plastic components.

In a yet further alternative embodiment, there is provided a method for preparing a fuel tank assembly which comprises providing a fuel tank and attaching fuel tank components to the internal or external surface of the fuel tank by means of an adhesive. The surfaces of the fuel tank and fuel tank components are preferably preatreated by corona, silane, plasma, flame, primer, coating, or cleaned with solvent, water or water and soap for adequate bonding.

Alternatively, the surfaces of the fuel tank and fuel tank components are sanded, sandblasted, or abraided for adequate bonding.

In another embodiment, there is provided a method for joining a plastic component having a surface to be joined to a surface of a plastic fuel tank which comprises coating one or both surfaces with an adhesive which bonds to low energy surface materials, pressing the two coated surfaces together to form a joint and allowing the adhesive to cure to bond the two surfaces together. Preferably, the joint is designed to shift failure mode of joint to shear to increase joint strength.

Preferably, the joint is designed to create tortuous paths to minimize fuel vapor emission.

In a further embodiment, there is provided a method for joining a component to a fuel tank which comprises (1) providing a fuel tank having a wall with an outer surface and an inner surface, the wall having an opening therethrough, and a single or multi-walled component having a first open end and a second open end, the second open end provided with an attaching element or an interference fit, (2) applying an adhesive either to the periphery of the tank wall opening or to the attaching element of the component, and (3) pushing the second open end of the plastic component into the fuel tank through the tank wall opening until it is in engagement with the periphery of the tank wall opening and bonded thereto by the adhesive. Preferably the attaching element is a clip, clamp or nut and bolt.

## Claims

1. A fuel tank assembly comprising a fuel tank and fuel tank component joined to the fuel tank by means of an adhesive wherein the fuel tank and the component have untreated low energy surfaces bonded together with the adhesive comprising an amine/organoborane complex, which adhesive can support a load of 1334 Newtons and exhibits a fuel vapor permeation rate of 46 g-mm/m²/day and the low energy surfaces do not require surface pretreatment.

2. A fuel tank assembly of Claim 1 wherein the fuel tank component comprises a fill spud, vent valve, access cover, fuel line, fuel pump, fuel cut off valve, fuel level gauge, clip, cam lock or fuel sender, roll-over valve or heat shield.

3. The fuel tank assembly of Claim 1 wherein the fuel tank is made of a thermoplastic or thermosetting polymer.

4. The fuel tank of Claim 1 wherein the fuel tank is a mono layer low energy surface material or a multilayer structure comprising a core layer of a fuel barrier polymer and outer layers of a low energy surface material.

5. The fuel tank assembly of Claim 4 wherein the low energy surface material is high density polyethylene and the fuel barrier polymer is selected from the group consisting of polyamides, fluoroelastomers, polyacetal homopolymers and copolymers, sulfonated and fluorinated HDPE, ethylene vinyl alcohol polymers and copolymers, hydroxy-functionalized polyethers and polyesters, and branched polyesters.

6. The fuel tank assembly of Claim 1 wherein the organoborane is a trialkylborane or alkyl cycloalkyl borane and the amine is selected from the group consisting of (1) amines having an amidine structural component; (2) aliphatic heterocycles having at least one nitrogen in the heterocyclic ring wherein the heterocyclic compound may also contain one or more nitrogen atoms, oxygen atoms, sulfur atoms, or double bonds in the heterocycle; (3) primary amines which in addition have one or more hydrogen bond accepting groups wherein there are at least two carbon atoms, preferably at least three carbon atoms, between the primary amine and the hydrogen bond accepting group, such that due to inter-or intramolecular interactions within the complex the strength of the B-N bond is increased; and (4) conjugated imines.

7. The fuel tank of Claim 6 wherein the complex of the organoborane and the primary amine corresponds to the formula 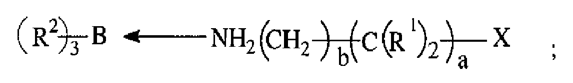 the organoborane heterocyclic amine complex corresponds to the formula 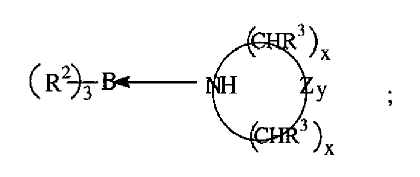 the organoborane amidine complex corresponds to the formula 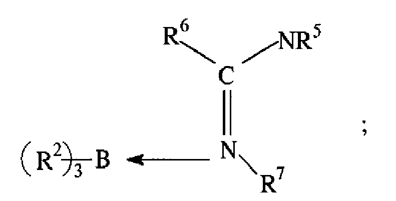 and the organoborane conjugated imine complex corresponds to the formula 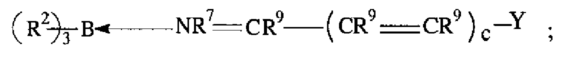 wherein B is boron; R¹ is separately in each occurrence hydrogen, a C₁₋₁₀ alkyl or C₃₋₁₀ cycloalkyl; R² is separately in each occurrence a C₁₋₁₀ alkyl, C₃₋₁₀ cycloalkyl or two or more of R² may combine to form a cycloaliphatic ring structure; R³ is separately in each occurrence hydrogen, a C₁₋₁₀ alkyl or C₃₋₁₀cycloalkyl; R⁴ is separately in each occurrence hydrogen, C₁₋₁₀ alkyl, C₃₋₁₀cycloalkyl, C₆₋₁₀ aryl or alkaryl; R⁵ , R⁶, and R⁷ are separately in each occurrence hydrogen, C₁₋₁₀ alkyl, C₃₋₁₀ cycloalkyl, or two or more of R⁵, R⁶ and R⁷ in any combination can combine to form a ring structure which can be a single ring or a multiple ring structure and the ring structure can include one or more of nitrogen, oxygen or unsaturation in the ring structure; R⁹ is independently in each occurrence hydrogen, C₁₋₁₀ alkyl or C₃₋₁₀ cycloalkyl, Y, (C(R⁹)₂-(CR⁹=CR⁹)_{c}-Y or two or more of R⁹ can combine to form a ring structure, or one or more of R⁹ can form a ring structure with Y provided the ring structure is conjugated with respect to the double bond of the imine nitrogen; X is a hydrogen-bond accepting group with the proviso that where the hydrogen bond accepting group is an amine it must be secondary or tertiary; Y is independently in each occurrence hydrogen, N(R⁴)₂, OR⁴, C(O)OR⁴, a halogen or an alkylene group which forms a cyclic ring with R⁷ or R⁹; Z is separately in each occurrence oxygen or -NR⁴; a is separately in each occurrence an integer of from 1 to 10; b is separately in each occurrence 0 or 1, with the proviso that the sum of a and b should be from 2 to 10; c is separately in each occurrence an integer of from 1 to 10; x is separately in each occurrence an integer of 1 to 10, with the proviso that the total of all occurrences of x is from 2 to 10; and y is separately in each occurrence 0 or 1.

8. The fuel tank assembly of Claim 6 wherein the organoborane/amine complex comprises an aliphatic heterocyclic amine which is a five or six membered heterocyclic compound.

9. The fuel tank assembly of Claim 6 wherein the organoborane compound of the complex has three ligands dselected from C₁₋₁₀ alkyl groups or phenyl groups, and the amine compound is selected from 1,6 diaminohexane, diethylamine, dibutylamine, diethylenetriamine, dipropylenediamine, 1,3 propylene diamine, and 1,2 propylene diamine.

10. The fuel tank assembly of Claim 6 wherein the organoborane compound of the complex has three ligands attached to the borane atom and which are selected from C₁₋₁₀ alkyl groups and phenyl and the amine compound is an alkanol amine or a diamine wherein the first amine group is a primary or secondary amine and the second amine is a primary amine.

11. The fuel tank assembly of Claim 6 wherein the amine compound of the complex is a polyoxyalkylene polyamine or a polyamine which is the reaction product of a diprimary amine and a compound having at least two groups which react with a primary amine.

12. A method for joining a plastic component having a surface to be joined to a surface of a plastic fuel tank which comprises coating one or both surfaces with the adhesive described in Claim 1, pressing the two coated surfaces together to form a joint and allowing the adhesive to cure to bond the two surfaces together.

13. The method of Claim 12 wherein the joint is designed to shift failure mode of joint to shear to increase joint strength.

14. The method of Claim 13 wherein the joint is designed to create tortuous paths to minimize fuel vapor emission.
